# EUROPÄISCHE PATENTSCHRIFT

(11) **EP 1 794 832 B1**
(45) Veröffentlichungstag und Bekanntmachung des Hinweises auf die Patenterteilung: **01.07.2015**
(21) Anmeldenummer: 05789364.6
(22) Anmeldetag: 20.08.2005
(51) Int. Cl.: H01M 8/02, H01M 8/04, H01M 8/12

(54) **Festoxid-Brennstoffzellenstapel mit einer Tragstruktur beinhaltend Heizvorrichtung und gasdurchlässige mit elektrisch leitendem Material gefüllte Durchtrittsöffnungen**
SOFC stack with support structure comprising heating element and gas permeable apertures filled electrically conducting material
empilement de piles à combustible ayant une structure de support comprenant un élément chauffant et des ouvertures perméables aux gaz remplies de matériau electriquement conducteur

(30) Priorität: 18.09.2004 DE 102004045375
(43) Veröffentlichungstag der Anmeldung: 13.06.2007
(73) Patentinhaber: Bayerische Motoren Werke Aktiengesellschaft, 80809 München (DE)
(72) Erfinder: HÖFLER, Thomas, 81247 München (DE); LAMP, Peter, 86916 Kaufering (DE); BRANDNER, Marco, 52062 Aachen (DE)
(86) Internationale Anmeldenummer: PCT/EP2005/009022
(87) Internationale Veröffentlichungsnummer: WO 2006/029689

(56) Entgegenhaltungen:
- EP-A- 1 271 684
- US-A1- 2004 018 406
- US-A1- 2004 048 128
- US-B1- 6 703 153

## Beschreibung

Die Erfindung betrifft einen SOFC-Stack mit mehreren übereinander gestapelten planaren Festoxid-Brennstoffzellen, die jede eine mit einer Durchtrittsöffnungen für ein Gas aufweisenden metallischen Tragstruktur für eine Kathoden-Elektrolyt-Anoden-Einheit und eine auf der anderen Seite der Tragstruktur vorgesehene Bipolarplatte aufweisen, wobei zwischen einander benachbarten Einzel-Zellen eine elektrische Leitfähigkeit gegeben ist. Zum technischen Umfeld wird neben der DE 102 38 860 A1 und der EP 1 271 684 A1 auf die US 2004/0018406 A1 sowie auf die US 2004/0048128 A1 verwiesen.

Festoxid-Brennstoffzellen (Solid Oxide Fuel Cell, SOFC) dienen dazu, die chemische Energie eines Brenngases zusammen mit einem Oxidationsmittel, z.B. Luft-Sauerstoff, auf direktem Weg elektrochemisch in elektrische Energie umzuwandeln. Die Umsetzung von Brenngas und Luftsauerstoff zu elektrischer Energie erfolgt an und in keramischen Schichten (Kathode, Elektrolyt, Anode). Bei planaren Brennstoffzellenkonzepten besteht eine Zelle aus einer flächigen Anordnung der keramischen Schichten. Zur Versorgung mit Brenngas und Luft, der Abfuhr der Restgase sowie zur elektrischen Verbindung von übereinander gestapelten Brennstoff-Einzelzellen in einer seriellen Anordnung, nämlich in sog. Stacks, dienen sog. Bipolarplatten, wobei die keramischen Schichten durchaus auch Teil dieser Bipolarplatten sein können. Dabei muss sichergestellt sein, dass an keiner Stelle eines Brennstoffzellen-Stacks Brenngas und Luft direkt miteinander in Kontakt kommen. Insbesondere kann die Bipolarplatte zusammen mit den keramischen Schichten eine Kassette bilden, die eine Gassorte, insbesondere das Brenngas, einschließt.

Die Betriebstemperatur von Festoxid-Brennstoffzellen liegt zwischen 600°C und 900°C. Festoxid-Brennstoffzellen werden üblicherweise relativ langsam auf ihre Betriebstemperatur gebracht, um eine Schädigung durch Auftreten von thermomechanischen Spannung zwischen den Keramikschichten untereinander bzw. dem Keramikverbund und den Bipolarplatten zu vermeiden. Thermomechanischen Spannungen zwischen den Keramikschichten untereinander bzw. dem Keramikverbund und den Bipolarplatten können nämlich zu Mikrorissen in den Keramikschichten sowie an den Keramik-Keramik-Grenzflächen und zwischen den Keramik-Metall-Grenzflächen und somit zu einer Zerstörung der SOFC führen.

Für den Einsatz in Kraftfahrzeugen sind Brennstoffzellen mit sehr kurzen Startzeiten erforderlich. Eine Entwicklung, die diesem Anspruch teilweise Rechnung trägt, ist, die keramischen Funktionsschichten nicht selbsttragend (z.B. Elektrolyt oder Anode als Substrat) sondern auf ein Metallsubstrat (z.B. Sintermetall oder eine perforierte Folie, siehe bspw. DE 102 38 860 A1) als dünne Schichten aufzubringen. Neben der thermomechanischen Festigkeit ist jedoch ein weiterer begrenzender Faktor die Einbringung der notwendigen Wärmemenge. In der EP 1 271 684 A2 ist eine Möglichkeit beschrieben, eine Festoxid-Brennstoffzelle mit Hilfe einer elektrischen Widerstandsheizung auf Betriebstemperatur zu bringen, indem zwischen den keramischen Schichten vorgesehene Metallfolien unter elektrische Spannung gesetzt werden und somit durch den resultierenden Stromfluss Wärme erzeugt wird. Diese vorbeschriebene Lösung erfordert jedoch ein zusätzliches Bauteil, dessen Integration und Kontaktierung im Stack eine erhebliche Steigerung der Komplexität einer solchen SOFC bedeutet. So besteht bei der so beschriebenen Methode die Gefahr, dass, wenn die Metallfolie oder sonstige Metallbauteile auf ihren Außenseiten nicht elektrisch isoliert sind, elektrische Kurzschlüsse über die Bipolarplatten oder die Elektroden der SOFC entstehen und somit die "Heizfolie" elektrisch überbrückt und damit unwirksam wird.

Die US 2004/0018406 A1 zeigt eine Brennstoffzelle, bei welcher der Elektrolyt mehrere seitliche Rippen aufweist, auf deren erster Seite die Anode und auf deren zweiter Seite die Kathode aufgebracht ist. Eigenständige Widerstands-Heizelemente sind entweder innerhalb der Anode oder der Kathode oder im Elektrolyten, zwischen den genannten Rippen und einem Substrat eingebaut. Auch hier sind somit aufwändige eigenständige Heizelemente erforderlich.

Die US 2004/0048128 A1 zeigt eine Brennstoff-Einzelzelle, bei welcher eine Kathode, ein Elektrolyt und eine Anode auf ein Substrat aufgebracht sind, welches Durchtrittsöffnungen aufweist. Auch diese Brennstoff-Einzelzelle enthält ein elektrisches Heizelement, welches abermals als eigenständiges Element zwischen dem Elektrolyten und der Anode vorgesehen ist und sich somit innerhalb der Kathoden-Elektrolyt-Anoden-Einheit befindet.

Hiermit soll nun ein SOFC-Stack nach dem Oberbegriff des Anspruchs 1 aufgezeigt werden, der im Hinblick auf eine Aufheizung elektrisch beheizbar ist und die sich dennoch durch einen einfachen und funktionssicheren Aufbau auszeichnet (= Aufgabe der vorliegenden Erfindung.

Die Lösung dieser Aufgabe ist dadurch gekennzeichnet, dass die Tragstruktur aus einem Metall besteht, das eine elektrisch isolierende Schutzoxidschicht bildet und als elektrische Widerstandsheizung zur Temperierung der Brennstoffzelle fungiert, wozu durch die Tragstruktur zwischen deren Schutzoxidschichten hindurch elektrischer Strom geleitet werden kann, und dass in zumindest einige der Durchtrittsöffnungen der Tragstruktur ein elektrisch leitfähiges Material zur elektrischen Verbindung zwischen der Bipolarplatte und der zugeordneten Kathoden-Elektrolyt-Anoden-Einheit solchermaßen eingebracht ist, dass ein Gasdurchlass durch diese Durchtrittsöffnungen möglich ist. Vorteilhafte Aus- und Weiterbildungen sind Inhalt der Unteransprüche.

Vorgeschlagen wird somit eine Ausführungsform einer SOFC-Brennstoffzelle, die wesentliche Nachteile des bekannten Standes der Technik beseitigt und damit die Verwirklichung einer schnellstartfähigen Festoxidbrennstoffzelle ermöglicht. Basis einer erfindungsgemäßen Brennstoffzelle ist eine dünne metallische Tragstruktur (bspw. eine Metallfolie im Dickenbereich von 30 bis 500 *µ*m als Träger der keramischen Funktionsschichten einer SOFC-Brennstoffzelle, die im Bereich der keramischen Funktionsschicht entweder perforiert ist oder sonstwie geartete geeignete Durchtrittsöffnungen aufweist, um den Zutritt von Reaktionsgasen zur jeweiligen Elektrode zu ermöglichen. Bevorzugt erstreckt sich diese metallische Tragstruktur über die gesamte Fläche der Bipolarplatte inklusive der im Randbereich vorgesehenen Gasführungen für Brenngas und Luft.

Ein Merkmal der vorgeschlagenen metallischen Tragstruktur ist, dass diese aus einem Material bzw. Metall besteht, das selbst eine elektrisch isolierende Schutzoxidschicht bildet, im Sinne einer Selbstpassivierung. Bevorzugte derartige Materialien sind sog. Aluminiumoxidbildner, bspw. Aluchrom Y Hf, oder Siliziumoxid-Bildner. Erstreckt sich nun die eine Schutzoxidschicht bildende Metallfolie oder dgl. als Tragstruktur für die keramischen Funktionsschichten über die gesamte Querschnittsfläche eines Brennstoffzellen-Stacks, wird vorteilhafterweise ohne jeglichen Zusatzaufwand ermöglicht, zwischen den übereinander gestapelten Brennstoff-Einzelzellen als Dichtungsmaterial zur gasdichten Abdichtung der Reaktanden gegeneinander auch ein elektrisch leitendes Dichtungsmaterial einzusetzen, da die erforderliche elektrische Isolierung zwischen den Einzelzellen bereits durch die Schutzoxidschicht der genannten Tragstruktur sichergestellt ist. Weiterhin wird damit ermöglicht, diese Tragstruktur selbst als elektrische Widerstandsheizung einzusetzen, ohne die Gefahr elektrischer Kurzschlüsse befürchten zu müssen. Die entsprechende elektrische Kontaktierung, zur Einleitung von elektrischem Strom in die bzw. Ableitung des elektrischen Stromes aus der Tragstruktur kann bspw. durch entsprechende elektrische Kontakte am äußeren Umfang der Tragstruktur erfolgen. Mit Hindurchleiten von elektrischem Strom durch die Tragstruktur erwärmt sich diese somit bei geeigneter Auslegung, worauf an späterer Stelle noch näher eingegangen wird, so dass die Tragstruktur selbst somit als elektrisches Widerstands-Heizelement fungieren kann.

Für die Funktion der Brennstoffzelle bzw. eines entsprechenden SOFC-Stacks ist jedoch eine elektrische Leitfähigkeit von einer Einzelzelle zur nächsten benachbarten Einzelzelle erforderlich, die üblicherweise über die sog. Bipolarplatte oder dgl. hergestellt wird. Innerhalb einer Einzelzelle muss somit eine elektrische Verbindung zwischen der Bipolarplatte (oder dgl.) und der dieser zugewandten Seite der Kathoden-Elektrolyt-Anoden-Einheit bestehen, nachdem zwischen der Bipolarplatte einer ersten Einzelzelle und der dieser zugewandten Seite der Kathoden-Elektrolyt-Anoden-Einheit einer benachbarten zweiten Einzelzelle eine elektrischen Verbindung besteht. Innerhalb einer Einzelzelle kann nun die elektrisch leitende Verbindung zwischen der Bipolarplatte und der Kathoden-Elektrolyt-Anoden-Einheit nicht weiter einfach (wie bislang üblich) über die metallische Tragstruktur der Kathoden-Elektrolyt-Anoden-Einheit hergestellt werden, da diese ja eine elektrisch nicht leitende Oxidschicht bildet. Für diese beschriebene Funktion der elektrischen Leitfähigkeit innerhalb einer Brennstoff-Einzelzelle wird nunmehr in einer ersten Ausführungsform der vorliegenden Erfindung ein in die Durchtrittsöffnungen in der Tragstruktur eingebrachtes, poröses bzw. zur Versorgung der Elektrode mit dem jeweiligen gasförmigen Reaktanden gasdurchlässiges und elektrisch leitfähiges Material vorgeschlagen, bei dem es sich bspw. um ein geeignet bearbeitetes Metall oder auch um Anodenmaterial oder Kathodenmaterial (der Kathoden-Elektrolyt-Anoden-Einheit) oder allgemein um eine elektrisch leitfähige Keramik handeln kann. Dabei kann die zur Darstellung des elektrischen Kontaktes notwendige "Füllung" der Durchtrittsöffnungen in der Tragstruktur mit elektrisch leitfähigem und gleichzeitig gasdurchlässigem Material bspw. durch Rakeln, Siebdruck, Walzen oder ähnliches erfolgen. Nach einer alternativen Ausführungsform ist es auch möglich, zur Herstellung der elektrischen Leitfähigkeit über die eine Schutzoxidschicht bildende Tragstruktur eine Beschichtung der Schutzoxidschicht zumindest im Bereich einiger Durchtrittsöffnungen vorzunehmen. Wird bzw. ist also zumindest im Bereich einiger Durchtrittsöffnungen auf die Schutzoxidschicht der Tragstruktur ein elektrisch leitfähiges Material aufgebracht, was bspw. durch Galvanik, Physikal Vapour Deposition oder ähnliches erfolgen kann, so ist eine elektrische Leitfähigkeit bei gleichzeitiger Gasdurchlässigkeit der Durchtrittsöffnungen sicher und einfach gewährleistet.

Eine wie im vorhergehenden Absatz ausführlich beschriebene Gestaltung ist beim genannten bekannten Stand der Technik, nämlich beispielsweise der US 2004/0018406 A1 sowie auf die US 2004/0048128 A1 weder gezeigt noch erforderlich, denn bei dem bzw. diesem bekannten Stand der Technik sind separate Heizelemente vorgesehen, die in die Kathoden-Elektrolyt-Anoden-Einheit integriert sind.

Was die metallische Tragstruktur nach der vorliegenden Erfindung betrifft, so können die Durchtrittsöffnungen hierin bspw. durch Ätzen, Stanzen, Schlitzen, Stechen oder ähnliche Verfahren erzeugt werden. Die Lochstruktur, d.h. die Form der Durchtrittsöffnungen kann bspw. durch konische, elliptische, quadratische, wabenförmige oder ähnliche Löcher gekennzeichnet sein. Der elektrische Widerstand und somit die mit vorgegebener elektrischer Spannung an der Tragstruktur erzielbare Heizleistung kann bspw. durch entsprechende Wahl der Dicke der Tragstruktur sowie der Strukturierung den jeweiligen Erfordernissen entsprechend angepasst werden. So lässt sich mit einem überproportional hohen Anteil von Durchtrittsöffnungen der elektrische Widerstand erhöhen, so dass durch gezielte lokal unterschiedliche Perforationen, d.h. durch unterschiedliche Gestaltung der Durchtrittsöffnungen auch lokal unterschiedliche Wärmemengen in die Einzelzelle eingebracht werden können. Darüber hinaus kann durch die Wahl und Kombination der elektrischen Verschaltung, nämlich Reihenschaltung oder Parallelschaltung der einzelnen "Heizfolien" im Brennstoffzellen-Stack, die durch die einzelnen Tragstrukturen der übereinander gestapelten Einzelzellen gebildet werden, der elektrische Gesamtwiderstand an die gewünschte Heizleistung und die zur Verfügung stehende Versorgungsspannung angepasst werden.

Vorteilhafterweise wird die Lebensdauer einer erfindungsgemäßen SOFC gegenüber dem bekannten Stand der Technik erhöht, da die sich auf der Tragstruktur bildende Schutzoxidschicht nicht nur elektrisch isolierend ist, sondern auch chemisch wesentlich beständiger ist als heute eingesetzte Metallsubstrate, die auf eine hohe eigene elektrische Leitfähigkeit angewiesen sind und oxidationsbedingt eine geringere Lebensdauer aufweisen. Unter chemischer Beständigkeit wird in diesem Zusammenhang die Korrosionsbeständigkeit gegenüber den in der SOFC vorkommenden Gasen und die Korrosionsbeständigkeit gegenüber die Materialeigenschaften beeinflussenden interdiffundierenden Elemente verstanden. Im übrigen ist die hier vorgestellte erfindungsgemäße SOFC unabhängig von der speziellen Anordnung der keramischen Funktionsschichten auf der beschriebenen Tragstruktur. Es ist möglich, sowohl eine entsprechende Einheit in der Reihenfolge Anode-Elektrolyt-Kathode als auch umgekehrt in der Reihenfolge Kathode-Elektrolyt-Anode aufzubringen. Die vorgestellte erfindungsgemäße SOFC ist ebenfalls unabhängig von der genauen Ausführung der Gasführung und weiteren elektrischen Kontaktierung im Stack, d.h. im Bereich der Bipolarplatten oder dgl., deren Funktion bspw. auch von einem metallischen Gestrick übernommen werden kann.

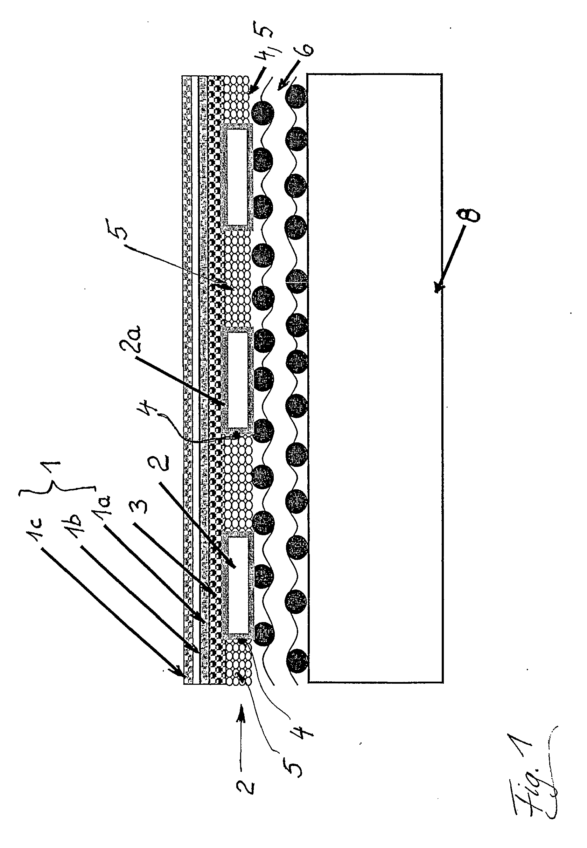

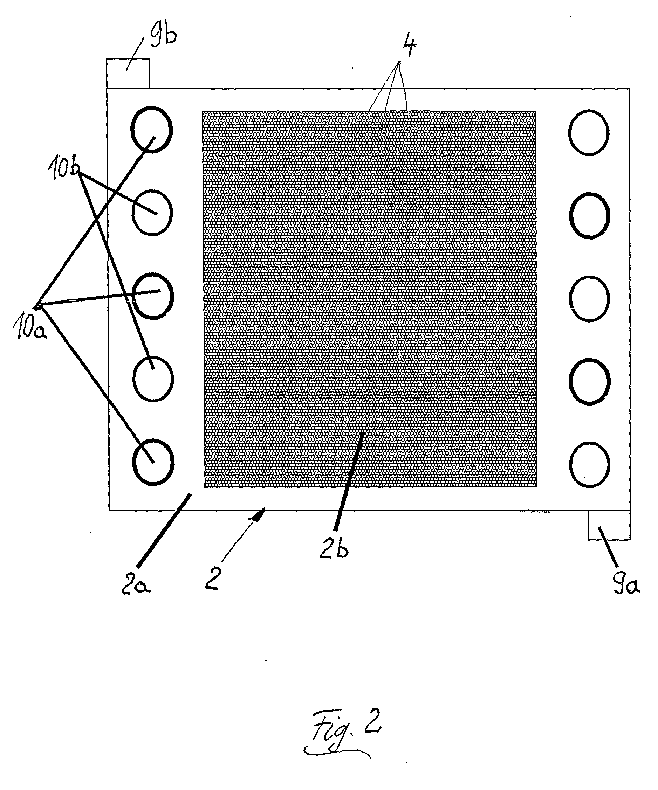

Die beigefügten Prinzipskizzen zeigen ein bevorzugtes Ausführungsbeispiel, wobei in **Figur 1** ein stark vergrößerter Querschnitt einer erfindungsgemäßen Brennstoff-Einzelzelle gezeigt ist, während in **Figur 2** die Aufsicht auf eine Tragstruktur (ohne keramische Funktionsschichten) dargestellt ist.

Mit der Bezugsziffer 1 ist sind die keramischen Funktionsschichten einer Brennstoff-Einzelzelle in Form einer Kathoden-Elektrolyt-Anoden-Einheit bezeichnet, wobei die Anoden-Schicht die Bezugsziffer 1 a trägt, der aufgebrachte Elektrolyt die Bezugsziffer 1 b und die darauf aufgebrachte Kathode die Bezugsziffer 1c. Diese Kathoden-Elektrolyt-Anoden-Einheit 1 ist auf eine Tragstruktur 2 aufgebracht, hier jedoch unter Zwischenlage eines sog. Anodensubstrats 3. Bei der Tragstruktur 2 handelt es sich um eine dünne metallische Folie oder dgl., in die Durchtrittsöffnungen 4 eingebracht sind. In diese Durchtrittsöffnungen 4 ist ein gasdurchlässiges, elektrisch leitfähiges Material 5 eingebracht. In Figur 1 unterhalb der Tragstruktur 2 ist eine Netzstruktur 6 oder dgl. vorgesehen, über die von seitlich ein gasförmiger Reaktand (Brenngas) an die Unterseite der Tragstruktur 2 und durch deren mit gasdurchlässigem Material 5 ausgefüllten Durchtrittsöffnungen 4 hindurch unter Passieren des porösen Anodensubstrates 3 zur Anode 1a der Kathoden-Elektrolyt-Anoden-Einheit 1 gelangen kann. An die Unterseite dieser Netzstruktur 6 schließt sich eine Bipolarplatte 8 an. Unterhalb dieser kann sich dann - wie üblich - die nächste Brennstoffzelle mit ihrer Kathoden-Schicht (1c) anschließen (nicht dargestellt), ebenso wie sich an die Kathoden-Schicht 1 c der figürlich dargestellten Brennstoff-Einzelzelle die darauf folgende Einzelzelle mit ihrer Bipolarplatte (8) anschließen kann (ebenfalls nicht dargestellt).

Die folienartige metallische Tragstruktur 2 besteht aus einem Metall, das selbst eine elektrisch isolierende Schutzschicht bildet, die in Fig.1 mit der Bezugsziffer 2a gekennzeichnet ist. Diese Tragstruktur 2 kann daher - wie vor der Beschreibung der Figuren ausführlich erläutert wurde - als elektrische Widerstandsheizung fungieren, wofür - wie aus Figur 2 hervorgeht - in einander diagonal gegenüberliegenden Eckbereichen der flächigen Tragstruktur geeignete Stromanschlussfahnen 9a, 9b an der Tragstruktur 2 vorgesehen sind. Figur 2 zeigt weiterhin die flächige Gestalt der Tragstruktur 2, die sich über die gesamte Fläche einer Brennstoff-Einzelzelle erstreckt und auch deren Randabschnitte mit umfasst, in denen Brenngasdurchtrittsöffnungen 10a bzw. Luftdurchtrittsöffnungen 10b im Hinblick auf eine im Brennstoffzellen-Stack integrierte Gasführung vorgesehen sind. Deutlich erkennt man in Figur 2 den perforierten Bereich 2b der Tragstruktur mit einer Vielzahl von Durchtrittsöffnungen 4, die - wie anhand von Fig.1 erläutert wurde - mit gasdurchlässigem, elektrisch leitfähigen Material ausgefüllt sind.

Eine erfindungsgemäße Brennstoffzelle erlaubt ein gezieltes Einbringen von Wärme zum Starten der Brennstoffzelle und zeichnet sich somit durch eine deutlich verkürzte Startzeit bei gleichzeitig effizientem Aufheizen aus. Dabei stellen sich nur geringe thermomechanische Spannungen ein, u.a. auch durch die dünne, leichte Tragstruktur, die einen Zellenaufbau in Dünnschichttechnik ermöglicht. Schließlich erleichtern die aufgrund der sich bildenden Schutzoxidschicht quasi selbsttätig isolierenden Ränder den Stackaufbau, wobei durchaus eine Vielzahl von Details abweichend von obigen Erläuterungen gestaltet sein kann, ohne den Inhalt der Patentansprüche zu verlassen.

## Patentansprüche

1. SOFC-Stack mit mehreren übereinander gestapelten planaren Festoxid-Brennstoffzellen, die jede eine mit einer Durchtrittsöffnungen (4) für ein Gas aufweisenden metallischen Tragstruktur (2) für eine Kathoden-Elektrolyt-Anoden-Einheit (1) und einer auf der anderen Seite der Tragstruktur (2) vorgesehene Bipolarplatte (8) aufweisen, wobei zwischen einander benachbarten Einzel-Zellen eine elektrische Leitfähigkeit gegeben ist,
**dadurch gekennzeichnet, dass** die Tragstruktur (2) aus einem Metall besteht, das eine elektrisch isolierende Schutzoxidschicht bildet und als elektrische Widerstandsheizung zur Temperierung der Brennstoffzelle fungiert, wozu durch die Tragstruktur (2) zwischen deren Schutzoxidschichten (2a) hindurch elektrischer Strom geleitet werden kann, und dass in zumindest einige der Durchtrittsöffnungen (4) der Tragstruktur (2) ein elektrisch leitfähiges Material (5) zur elektrischen Verbindung zwischen der Bipolarplatte (8) und der zugeordneten Kathoden-Elektrolyt-Anoden-Einheit (1) solchermaßen eingebracht ist, dass ein Gasdurchlass durch diese Durchtrittsöffnungen (4) möglich ist.

2. SOFC-Stack nach Anspruch 1,
**dadurch gekennzeichnet, dass** das Metall der Tragstruktur (2) ein Aluminiumoxidbildner oder ein Siliziumoxid-Bildner ist.

3. SOFC-Stack nach Anspruch 1 oder 2,
**dadurch gekennzeichnet, dass** in zumindest einige der Durchtrittsöffnungen (4) der Tragstruktur (2) ein gasdurchlässiges und elektrisch leitfähiges Material (5) in Form eines geeignet bearbeiteten Metalls oder einer elektrisch leitfähigen Keramik oder in Form von Elektrodenmaterial eingebracht ist.

4. SOFC-Stack nach Anspruch 1 oder 2,
**dadurch gekennzeichnet, dass** auf die Schutzoxidschicht (2a) der Tragstruktur (2) zumindest im Bereich einiger Durchtrittsöffnungen (4) eine elektrisch leitfähige Beschichtung aufgebracht ist.

## Claims

1. An SOFC stack with a plurality of planar solid oxide fuel cells stacked one above the other, each of which has a metallic support structure (2), which has through-openings (4) for a gas, for a cathode-electrolyte-anode unit (1), and a bipolar plate (8) provided on the other side of the support structure (2), wherein an electric conductivity is provided between mutually adjacent single cells, **characterised in that** the support structure (2) comprises metal, which forms an electrically insulating protective oxide layer and acts as an electric resistance heater to control the temperature of the fuel cell, for which purpose electric current can be conducted through the support structure (2) between its protective oxide layers (2a), and **in that** an electrically conductive material (5) for the electric connection between the bipolar plate (8) and the associated cathode-electrolyte-anode unit (1) is introduced into at least some of the through-openings (4) of the support structure (2) in such a way that it is possible for gas to pass through these through-openings (4).

2. An SOFC stack according to claim 1, **characterised in that** the metal of the support structure (2) is an aluminium oxide former or a silicon oxide former.

3. An SOFC stack according to claim 1 or 2, **characterised in that** a gas-permeable and electrically conductive material (5) in the form of a suitably processed metal or an electrically conductive ceramic or in the form of electrode material is introduced into at least some of the through-openings (4) of the support structure (2).

4. An SOFC stack according to claim 1 or 2, **characterised in that** an electrically conductive coating is applied to the protective oxide layer (2a) of the support structure (2) at least in the region of some through-openings (4).

## Revendications

1. Empilement de piles à combustible à oxyde solide comprenant plusieurs piles à combustible à oxyde solide plane empilées les unes sur les autres qui comportent chacune une structure support métallique (2) d'une unité cathode-électrolyte-anode (1), comprenant une ouverture de passage (4) d'un gaz et une plaque bipolaire (8) située sur l'autre face de la structure support (2), une conductivité électrique étant présente entre les différentes cellules voisines,
**caractérisé en ce que**
la structure support (2) est réalisée en un métal qui forme une structure d'oxyde de protection électriquement isolante et fait office de chauffage par résistance électrique pour équilibrer la température de la pile à combustible, ce pourquoi un courant électrique peut passer au travers de la structure support (2), entre ses couches d'oxyde de protection (2a), et, dans au moins certaines des ouvertures de passage (4) de la structure support (2) un matériau électriquement conducteur (5) peut être introduit pour permettre une liaison électrique entre la plaque bipolaire (8) et l'unité cathode-électrolyte-anode (1) associée de sorte qu'un passage de gaz au travers de ces ouvertures de passage (4) soit possible.

2. Empilement de piles à combustible à oxyde solide conforme à la revendication 1,
**caractérisé en ce que**
le métal de la structure support (2) est un agent de formation d'oxyde d'aluminium ou un agent de formation d'oxyde de silicium.

3. Empilement de piles à combustible à oxyde solide conforme à la revendication 1 ou 2,
**caractérisé en ce que**
dans au moins certaine des ouvertures de passage (4) de la structure support (2) est introduit un matériau électriquement conducteur et perméable aux gaz (5) sous la forme d'un métal traité de manière adaptée ou d'une céramique électriquement conductrice ou sous la forme d'un matériau d'électrode.

4. Empilement de piles à combustible à oxyde d'azote conforme à la revendication 1 ou 2,
**caractérisé en ce qu'**
un revêtement électriquement conducteur est appliqué sur la couche d'oxyde de protection (2a) de la structure support (2), au moins dans la zone de quelques ouvertures de passage (4).
